Europäisches Patentamt

(19) European Patent Office

Office européen des brevets

(11) Publication number: **0 240 324
B1**

## (12) EUROPEAN PATENT SPECIFICATION

(45) Date of publication of the patent specification:
29.08.90

(21) Application number: 87302811.2

(22) Date of filing: 31.03.87

(51) Int. Cl.⁵: **C08F 4/04, C08F 10/00**

(54) Process for preparing a catalyst component for use in a propylene polymerization catalyst.

(30) Priority: 01.04.86 FI 861388

(43) Date of publication of application:
07.10.87 Bulletin 87/41

(45) Publication of the grant of the patent:
29.08.90 Bulletin 90/35

(84) Designated Contracting States:
AT BE CH DE ES FR GB GR IT LI LU NL SE

(56) References cited:
US-A- 4 195 070
US-A- 4 421 674

(73) Proprietor: NESTE OY, Keilaniemi,
SF-02150 Espoo 15(FI)

(72) Inventor: Garoff, Thomas, Borgstr. Grand 4 K,
SF-00840 Helsinki(FI)

(74) Representative: Lamb, John Baxter et al, MARKS &
CLERK 57/60 Lincoln's Inn Fields, London
WC2A 3LS(GB)

## Description

The invention concerns catalysts components for propylene-polymerizing catalysts which consist of an organoaluminium compound, an electron donor and a solid catalyst component which has been obtained when a compound containing magnesium has reacted with a titanium halogen compound. The invention also concerns a procedure for manufacturing these catalyst components and a procedure for polymerizing propylene, making use of said catalyst components.

For polymerizing alpha olephins, there are known prior art catalysts with high activity which have been manufactured from an aluminium alkyl compound, from an electron donor and from a halogenated titanium compound on a carrier substance comprising various magnesium compounds. As the magnesium compound, usually a chlorinated magnesium compound has been used, which may be for instance water-free magnesium chloride alone or together with other magnesium compounds, or an organic magnesium compound which has been prepared by halogenating organic magnesium compounds with the aid of compounds containing chlorine.

In polymerization catalysts of this type, the properties of the solid carrier component have a significant influence on the properties of the ultimate catalyst, for instance on its activity. These properties can be substantially influenced through the mode of manufacturing the carrier component.

The present invention concerns catalyst components in which the carrier component has been prepared from water-soluble compounds containing magnesium, which may be natural minerals or synthetic minerals. There is nothing novel in itself in the use of magnesium minerals as starting materials in preparing inert carrier components for Ziegler-Natta catalysts to the purpose of polymerizing olefins.

It has, however, turned out to be difficult to manufacture, from various magnesium compounds and from minerals containing them, active Ziegler-Natta catalysts, in particular those for the polymerization of propylene, because in these processes the catalysts are highly sensitive to moisture and to water of crystallisation contained in the carrier. Minimal quantities of water of crystallisation already reduce the activity of the catalyst significantly.

The present invention relates to a catalyst component for use in a propylene-polymerization catalyst which consists of an organoaluminium compound, an external electron donor and a solid catalyst component which has been obtained when a solid carrier component containing magnesium has reacted with a titanium halogen compound and which is free of the drawbacks mentioned and, therefore, is fit to be used in the polymerization of propylene.

The catalyst component of the invention is characterized in that it has been prepared by a process comprising:

(a) precipitating a water-soluble magnesium compound from its aqueous solution with the aid of an alkali;

(b) separating the solid magnesium component and dissolving it in hydrochloric acid;

(c) evaporating the solution until dry;

(d) heating the salt mixture thus obtained at 130 to 150°C;

(e) dissolving the magnesium component in ethanol;

(f) drying the ethanol solution of the magnesium component with the aid of periodic azeotropic distillation;

(g) precipitating the solid carrier component from the ethanol solution; and

(h) reacting the said carrier compound with a titanium halogen compound in the presence of an internal electron donor or without an electron donor.

The invention also concerns the above procedure for manufacturing the catalyst component.

The catalyst component of the invention affords several advantages over carrier components containing magnesium which have been prepared by conventional synthesis techniques. For instance, in manufacturing the carrier component it is possible to use an open reaction vessel, and because the synthesis is not sensitive to oxygen and moisture, an inert nitrogen atmosphere is not absolutely indispensable in the synthesis. In comparison with carriers which have been prepared by halogenating an organic carrier component containing a magnesium compound, the carrier component is easier and less expensive to prepare. As the chlorinating agent, hydrochloric acid is the cheapest possible substance, and in the manufacturing process conventional aqueous solutions of hydrochloric acid may be used because the water of crystallisation can be removed in a simple manner. Moreover, in preparing the carrier component, hydrochloric acid can be used in excess because hydrochloric acid is easy to remove in the next synthesis step. One more advantage of the catalyst component and the procedure of the invention is that any magnesium products which may be formed as byproducts, such as MgO-HCl, and which impair the properties of the catalyst, escape efficiently from the catalyst component of the invention.

As taught by the invention, aqueous magnesium salts of any kind can be used in preparing active catalyst components for polymerizing propylene. Thus, catalyst components may be prepared for instance from the following magnesium compounds: $MgSO_4$, $Mg(NO_3)_2$, $MgAc_2$, $MgNO_2$, $MgClO$, $MgClO_3$, $MgIO_4$, $Mg(CHO_2)_2$, $Mg(CH_3COO)_2$, $Mg(C_2H_7COO)_2$, $MgBr_2$, $MgBrO_3$, $Mg(CN)_2$, $MgI_2$, $Mg(IO_3)_2$, etc.

When preparing the catalyst component of the invention, a magnesium compound is first dissolved in water. Thereafter the pH of the solution is raised by adding an alkali to the solution, for in stance NaOH and KOH. Most appropriately the alkali is added in the form of an aqueous solution of which the concentration may vary from 0.1 N to a saturated solution. The use of concentrated alkali solutions is advantageous because less water will have to be removed from the system. Such a quantity of alkali is added that the solution becomes clearly alkaline, advantageously up to pH 10, whereby the magnesium component will precipitate from the solution as a hydroxide.

The magnesium compound is separated from the solution by centrifuging or by allowing it to settle. If desired, the precipitate may be washed with water once or several times. Thereafter, it is suspended in water or alcohol. As the alcohol, one may use for instance methanol, ethanol or propanol. Thereafter, it is suspended in water and such a quantity of hydrochloric acid is added that the pH of the suspension is lowered to 2 or less.

Hydrochloric acid is advantageously added in the form of an aqueous solution. The concentration of the solution may vary from 0.1 N to a saturated solution. Magnesium hydroxide is completely dissolved when the pH of the suspension has gone down far enough.

After the magnesium component has been dissolved in hydrochloric acid, the solution is evaporated in the next step until dry. At the same time the excess of hydrochloric acid evaporates. Subsequent to evaporation, the salt mixture is slightly heated at 130 to 150°C. The requisite heating time ranges from 0.5 to 1.5 hours, respectively 2 hours, most properly about 1 hr. Excessive temperature causes decomposition of the magnesium component into magnesium chloride and hydroxide, whereby the yield is lowered.

After the heating, the salt mixture is dissolved in ethanol, whereby the magnesium component fit to serve as a carrier dissolves completely. The undissolved constituents may be separated by centrifuging or filtering from the ethanolic solution. Any insoluble magnesium compounds produced in the calcinting process, such as magnesium chloride for instance, can in this manner be separated quite simply.

The clear ethanol solution thus obtained now contains exclusively magnesium component with I water of crystallisation. Removal of the I water of crystallisation is indispensable for obtaining an active catalyst component. As taught by the invention, the water of crystallisation is removed by distillation, with the aid of periodic azeotropic distillation. During this distillation, an azeotropic mixture of alcohol and water escapes from the solution, whereby the quantity of water is reduced. By adding new water-free ethanol to the solution and by repeated distillation, total removal of crystal water from the magnesium component is accomplished.

The number of azeotropic distilling runs required depends on the amount of water present in the solution and on the intended use of the catalyst. When manufacturing a carrier component for polymerizing propylene, a carrier nearly free of water of crystallisation is required, and experience has taught that this is achieved if the number of distilling runs is 8 to 15, advantageously 10 to 12. The water content of the carrier component can thus be brought down to 0.3 moles of water of crystallisation, which can be considered the upper limit for propylene-polymerization catalysts.

After removing the water of crystallisation, precipitation of the magnesium carrier component is effected by transferring the dried ethanolic solution into a cold solvent, whereby the magnesium component will precipitate. Suitable solvents are common organic hydrocarbons used as solvents. Heptane is a highly appropriate solvent for the reason that its boiling point is high enough so that in the titanizing step which has to be carried out subsequently titanium has time to react, and on the other hand it is low enough to avoid melting of the carrier component in the titanizing step.

When the ethanolic solution containing the magnesium component is added to cold heptane, the carrier component is precipitated in finely divided form. After washing and drying, the carrier component is titanized with the aid of titanium tetrachloride in a manner known in itself in the art, for producing the catalyst component.

Titanizing may be accomplished for instance in that the solid carrier component is mixed with a titanium halogen compound once or several times. Before, during or after the titanizing process the catalyst component may furthermore be treated with the aid of an internal electron donor compound. The titanizing is preferably accomplished in two steps between which may be added internal electron donor, which is usually an amine, ether or ester of its tye. A suitable donor is, for instance, diisobutylphthalate, of which the quantity may be 0.05 to 0.3, most appropriately 0.2, mol/mol Mg.

In the first step a low temperature is to be recommended, e.g. below 0°C, preferably below -20°C. The second titanizing step may be carried out at higher temperature, e.g. at 85 to 110°C, a reaction time of 1-1.5 hours being sufficient. The solid reaction product is then separated from the liquid phase and washed with hydrocarbon solvents to remove impurities and derivatives. The catalyst component may be dried in light vacuum or in nitrogen gas at room temperature, or at slightly elevated temperature, and it may be homogenized by grinding it in a ball mill.

The catalyst component of the invention may then be used to polymerize propylene by allowing it to come into contact with an Al compound and an external compound releasing electrons. In the role of external compounds releasing electrons may be used, for instance, amines, ethers, esters (preferably alkyl and arylesters of aromatic carboxylic acids) or silane compounds (alkyl/aryl silanes), examples of such being, among others, the methyl and ethyl esters of benzoic, toluic and phthalic acid, isobutylesters of phthalic acid, triethoxysilane, etc. Said electron donors are compounds which are able to from complexes with Al alkyls. The stereo-specificity of the catalyst can be improved with their aid.

The external compound releasing electrons, or donor, and the Al alkyl are mixed together, the molar proportion of the compound releasing electrons to the Al compound being about 20 and the Al/Ti molar proportion being between 10 and 300, depending on the polymerizing system. Polymerization may be carried out either as slurry or bulk polymerization, or in the gas phase.

Catalyst components and catalysts prepared as taught by the invention may be used to polymerize propylene, by the slurry, bulk and gas phase methods; the catalyst components of the invention are well suited for use in polymerizing propylene because their content of water of crystallisation is singularly low and, as a result, the activity of the catalysts is particularly high the regarding polymerization of propylene.

The invention is more closely illustrated in the following examples.

Example 1

25,6 g $Mg(NO_3)_2.6H_2O$ were suspended in 100 ml water. 8.0 g NaOH were added to the suspension in 100 ml water. The mixture was centrifuged for 10 min. at 3000 rpm, washed twice with water, and thereafter titrated with conc. hydrochloric acid to pH 1.5. Thereafter, the solution was evaporated until dry, and the dried salt was calcined for 1 hr at 140°C. The salt was poured, with mixing, into 200 ml ethanol. The solution was centrifuged for 10 min. at 3000 rpm. The clear solution was poured into a three-necked flask (1 liter), in which the drying of the ethanol/carrier component was carried out by azeotropic distillation. The drying process consumed 400 ml absolute ethanol (moisture content < 100 ppm). The distillation took place in a slow nitrogen flow. The dry (moisture content < 400 µg $H_2O$/0.1 ml) hot ethanol/carrier solution was transferred, with mixing, into 500 ml cold heptane, whereby the carrier component crystallized. The extra ethanol was washed off with two heptane washings, whereafter the carrier component was transferred into cold titanium tetrachloride (400 ml, -20°C). After the mixture had warmed up to room temperature, 0.1 mol/mol Mg of diisobutylphthalate were added thereto. The mixture was boiled for 1 hr at 110°C, whereafter the catalyst component was allowed to settle, and the $TiCl_4$ solution was exchanged for new solution and the treatment repeated. The completed catalyst component was washed with heptane and dried with nitrogen. The yield was 0.6 g, and the catalyst contained: Mg 18.0%, Ti 4.0%, and $Cl^-$ 59%.

The carrier component prepared in the way just described was applied in propylene polymerization by adding into a 2-litre polymerization reactor catalyst which had been prepared by mixing, as aluminium alkyl compound, triethylaluminium and, as Lewis compound, diphenylmethoxysilane (Al/donor mole proportion: 20) in 50 ml heptane and admixing to this, after 5 minutes, carrier component so as to make the Al/Ti molar proportion 200. Polymerization was carried out under the following conditions as follows: propylene partial pressure 9.0 bar, hydrogen partial pressure 0.3 bar, temperature 70°C, and polymerization time 3 hrs.

The activity of the catalyst was found to be 4.6 kg PP per g of catalyst in 3 hours.

Example 2

21.4 g $Mg(CH_3CO_2)_2.4H_2O$ were suspended in 100 ml $H_2O$, and 8.0 g NaOH/100 ml $H_2O$ were added. The produced Mg $(OH)_2$ suspension (pH 10) was centrifuged for 10 min. at 3000 rpm, washed twice with water, and the centrifuging process was repeated. The precipitate was suspended in 100 ml water and titrated with conc. hydrochloric acid (38%) to pH 1.5, whereafter the solution was evaporated until dry, and the dried salt was calcined for 1 hr at 140°C. The salt was poured, with mixing, into 200 ml ethanol. The solution was centrifuged for 10 min. at 3000 rpm. The clear solution was poured into a three-necked flask (1 litre), in which the drying of the ethanol/-carrier component solution was carried out with the aid of azeotropic distillation. The drying process consumed 600 ml absolute ethanol (moisture content less than 100 ppm). The distillation took place in a slow nitrogen flow. The dry (moisture content < 400 µg $H_2O$/0.1 ml) hot ethanol carrier component solution was transferred into 500 ml of cold heptane, with mixing, whereby the carrier component crystallized. The extra ethanol was washed off with two heptane washings, whereafter the carrier component was transferred into cold titanium tetrachloride (400 ml, -20°C). After the mixture had warmed up to room temperature, 0.1 mol/mol Mg of diisobutylphthalate were added. The mixture was boiled for 1 hr at 110°C, whereafter the catalyst was allowed to settle and the $TiCl_4$ solution was exchanged for new solution and the treatment repeated. The completed catalyst component was washed with heptane and dried with nitrogen. The yield was 4.5 g, and the catalyst component contained: Mg 18.0%, Ti 3.5%, $Cl^-$ 60.0%, and $CH_3CO_2^-$ < 150 ppm. The catalyst was used to polymerize propylene as in Example 1, and its activity was then found to be 5.8 kg PP per g of catalyst in 3 hours. The bulk density of the polymer was 0.27 g/ml, isotacticity 91.7%, and particle distribution 90% in the range 0.1 to 1.0 mm.

Example 3

25 g $MgSO_4.7H_2O$ were suspended in 100 ml $H_2O$. 8.08 g NaOH were added into the solution in 100 ml water. Hereby, a suspension with pH 10 was obtained. The mixture was centrifuged for 10 min. at 3000 rpm, washed twice with water, and the centrifuging process was repeated. The water suspension of magnesium hydroxide was transferred into a decanter, and it was titrated with conc. hydrochloric acid to pH 1. Thereafter, the solution was evaporated until dry, and the dried salt was slightly (140°C) calcined for 1 hr. The salt was poured, with mixing, into 200 ml ethanol. The mixture was centrifuged for 10 min. at 3000 rpm. The clear solution was poured into a three-necked flask (1 litre), in which drying of the ethanol/carrier solution was carried out with the aid of azeotropic distillation. The drying process consumed 600 ml absolute ethanol (moisture content < 100 ppm). The distillation took place in a slow nitrogen flow. The dry (moisture content < 400 µg $H_2O$/0.1 ml) hot ethanol/carrier solution was transferred, with mixing, into 500 ml cold heptane, whereby the carrier component crystallized. The extra ethanol was washed off with two heptane washings, whereafter the carrier component was transferred into cold titanium tetrachloride (500 ml, -20°C). After the mixture had warmed up to room temperature, 0.1 mol/mol Mg of diisobutylphthalate were added thereto. The mixture was boiled for 1 hr at 110°C, whereafter the catalyst component was allowed to settle and the TiCl₄ solution was once exchanged for new solution and the treatment repeated. The completed catalyst component was washed with heptane and dried with nitrogen. The yield was 1.5 g, and the catalyst component contained: Mg 16.0%, Ti 3.0%, Cl⁻ 54.0%, SO₄ 0.14%, and Na 0.30%. The catalyst was used to polymerize propylene as in Example 1, and its activity was 6.7 kg PP per g of catalyst in 3 hours. The bulk density of the polymer was 0.27 g/ml, isotacticity 90.5%, and particle distribution 90% in the range 0.1 to 1.0 mm.

## Claims

1. A process for preparing a catalyst component for use in a propylene polymerization catalyst said propylene polymerization catalyst comprising an organoaluminium compound, an external electron donor and a solid catalyst component obtained by reacting a solid carrier component containing magnesium with a titanium halogen compound, which process comprises:

    (a) precipitating a water-soluble magnesium compound from an aqueous solution thereof with the aid of an alkali;

    (b) separating the solid magnesium component and dissolving it in hydrochloric acid;

    (c) evaporating the resultant solution until dry;

    (d) heating the resultant salt mixture at 130 to 150°C;

    (e) dissolving the magnesium component in ethanol;

    (f) drying the ethanol polution of the magnesium component with the aid of the periodic azeotropic distillation

    (g) precipitating a solid carrier component from the ethanolic solution, and

    (h) reacting the said carrier compound with a titanium halogen compound in the presence of an internal electron donor or without an electron donor.

2. A process according to claim 1, characterised in that after evaporating the hydrochloric acid, the salt mixture is heated for 0.5 to 2 hours.

3. A process according to claim 1 or claim 2, characterised in that the water-soluble magnesium compound is precipitated by raising the pH up to at least pH 10 by means of sodium hydroxide or potassium hydroxide.

4. A process according to any one of the preceding claims characterized in that in the drying of the ethanolic solution, 8–15 periodic azeotropic distillations are effected.

5. A propylene polymerization catalyst comprising a catalyst component obtained by a process as claimed in any one of the preceding claims.

6. A process for polymerizing propylene using a catalyst as claimed in claim 5.

## Patentansprüche

1. Verfahren zur Herstellung einer Katalysatorkomponente für die Verwendung in einem Propylen-Polymerisationskatalysator, der eine Organoaluminiumverbindung, einen äußeren Elektronendonator und eine feste Katalysatorkomponente, erhalten durch Umsetzung einer festen Magnesium enthaltenden Trägerkomponente mit einer Titanhalogenverbindung, umfaßt, welches Verfahren umfaßt:

    a) die Ausfällung einer wasserlöslichen Magnesiumverbindung aus einer wäßrigen Lösung derselben mit einem Alkali;

    b) die Abtrennung der festen Magnesiumkomponente und ihre Auflösung in Chlorwasserstoffsäure;

    c) das Eindampfen der entstandenen Lösung bis zur Trocknung;

    d) das Erhitzen der entstandenen Salzmischung bei 130 bis 150°C;

    e) das Lösen der Magnesiumkomponente in Ethanol;

    f) das Trocknen der Ethanollösung der Magnesiumkomponente durch periodische azeotrope Destillation;

    g) das Ausfällen einer festen Trägerkomponente aus der ethanolischen Lösung; und

    h) die Umsetzung der Trägerverbindung mit einer Titanhalogenverbindung in Gegenwart eines inneren Elektronendonators oder ohne einen Elektronendonator.

2. Verfahren gemäß Anspruch 1, dadurch gekennzeichnet, daß nach dem Abdampfen der Chlorwasserstoffsäure die Salzmischung 0.5 bis 2 Stunden erhitzt wird.

3. Verfahren gemäß Anspruch 1 oder 2, dadurch gekennzeichnet, daß die wasserlösliche Magnesiumverbindung ausgefällt wird, indem man den pH-Wert mit Natriumhydroxyd oder Kaluimhydroxyd auf zumindest einen Wert von 10 erhöht.

4. Verfahren gemäß einem der vorhergehenden Ansprüche, dadurch gekennzeichnet, daß bei der Trocknung der ethanolischen Lösung 8 bis 15 periodische azeotrope Destillationen durchgeführt werden.

5. Propylen-Polymerisationskatalysator, enthaltend eine Katalysatorkomponente, die nach einem Verfahren gemäß einem der vorhergehenden Ansprüche erhalten wurde.

6. Verfahren zur Polymerisation von Propylen unter Verwendung eines Katalysators gemäß Anspruch 5.

## Revendications

1. Un procédé pour préparer un composant de catalyseur destiné à être utilisé dans un catalyseur de polymérisation du propylène, ledit catalyseur de polymérisation du propylène comprenant un composé organoaluminium, un donneur d'électron externe et un composant solide de catalyseur obtenu en faisant réagir un composant solide de support contenant du magnésium avec un composé halogéné de titane, lequel procédé comprend:

a) précipitation d'un composé de magnésium soluble dans l'eau depuis une solution aqueuse de celui-ci à l'aide d'un alcali;

b) séparation du composant de magnésium solide et dissolution de celui-ci dans l'acide chlorhydrique;

c) évaporation de la solution résultante jusqu'à siccité;

d) chauffage du mélange de sel résultant à 130 à 150°C;

e) dissolution du composant de magnésium dans l'éthanol;

f) séchage de la solution dans l'éthanol du composant de magnésium à l'aide d'une distillation azéotropique périodique;

g) précipitation d'un composant solide de support depuis la solution éthanolique; et

h) réaction dudit composé de support avec un composé halogéné de titane en présence d'un donneur d'électron interne ou sans donneur d'électron.

2. Un procédé selon la revendication 1, caractérisé en ce que, après évaporation de l'acide chlorhydrique, on chauffe le mélange de sel pendant 0.5 à 2 heures.

3. Un procédé selon la revendication 1 ou la revendication 2, caractérisé en ce qu'on précipite le composé de magnésium soluble dans l'eau en augmentant le pH jusqu'au moins pH 10 au moyen d'hydroxyde de sodium ou d'hydroxyde de potassium.

4. Un procédé selon l'une quelconque des revendications précédentes, caractérisé en ce que, au cours du séchage de la solution éthanolique, on effectue 8-15 distillations azéotropiques périodiques.

5. Un catalyseur de polymérisation du propylène comprenant un composant de catalyseur obtenu par un procédé tel que revendiqué dans l'une quelconque des revendications précédentes.

6. Un procédé pour la polymérisation du propylène utilisant un catalyseur tel que reveniqué à la revendication 5.